# EUROPÄISCHE PATENTSCHRIFT

(11) **EP 3 914 889 B1**
(45) Veröffentlichungstag und Bekanntmachung des Hinweises auf die Patenterteilung: **05.10.2022**
(21) Anmeldenummer: 19701641.3
(22) Anmeldetag: 24.01.2019
(51) Int. Cl.: G01M 11/00, G01N 21/55, G01M 3/38, G02B 7/00, B23K 26/70, G02B 6/42, G01N 21/958

(54) **ANORDNUNG ZUR ÜBERWACHUNG EINES OPTISCHEN ELEMENTS, LASERQUELLE UND EUV-STRAHLUNGSERZEUGUNGSVORRICHTUNG**
ARRANGEMENT FOR MONITORING AN OPTICAL ELEMENT, LASER SOURCE AND EUV RADIATION GENERATION APPARATUS
ARRANGEMENT DE SURVEILLANCE D'UN ÉLÉMENT OPTIQUE, SOURCE LASER ET DISPOSITIF DE GÉNÉRATION DE RAYONNEMENT EUV

(43) Veröffentlichungstag der Anmeldung: 01.12.2021
(73) Patentinhaber: TRUMPF Lasersystems for Semiconductor Manufacturing GmbH, 71254 Ditzingen (DE)
(72) Erfinder: SCHULZ, Joachim, 70839 Gerlingen (DE); WEBER, Marc, 70567 Stuttgart (DE); SCHMITT, Matthias, 71229 Leonberg (DE)
(74) Vertreter: Kohler Schmid Möbus Patentanwälte
(86) Internationale Anmeldenummer: PCT/EP2019/051679
(87) Internationale Veröffentlichungsnummer: WO 2020/151821

(56) Entgegenhaltungen:
- EP-B1- 1 398 612
- WO-A1-2015/120889
- DE-A1-102007 030 398
- DE-A1-102008 004 745
- DE-B3-102012 102 785
- DE-C1- 19 839 930

## Beschreibung

Die vorliegende Erfindung betrifft eine Anordnung zur Überwachung eines optischen Elements, umfassend: eine Lichtquelle zum Aussenden von Strahlung auf eine Oberfläche des optischen Elements, einen Detektor zur Detektion der an der Oberfläche des optischen Elements zumindest teilweise reflektierten Strahlung, sowie eine Halterung für das optische Element, in welche die Lichtquelle und der Detektor integriert sind. Die Erfindung betrifft auch eine Laserquelle sowie eine EUV-Strahlungserzeugungsvorrichtung mit einer solchen Anordnung.

Eine Anordnung der weiter oben beschriebenen Art ist aus der EP1398612B1 bekannt geworden. Bei einer solchen Anordnung hängt die Intensität der an der Oberfläche des optischen Elements reflektierten und vom Detektor detektierten Strahlung von der Oberflächenbeschaffenheit des optischen Elements ab. Daher dient die dort beschriebene Anordnung zur Überwachung der Funktionalität des optischen Elements, insbesondere um Beschädigungen oder eine Alterung des optischen Elements zu erkennen. Die Wellenlänge der von der Lichtquelle ausgesandten Strahlung ist hierbei derart gewählt, dass zumindest ein Teil der ausgesandten Strahlung an der Oberfläche reflektiert wird. Das optische Element kann im Strahlengang eines Laserstrahls angeordnet sein, der eine andere Wellenlänge als die Strahlung der Lichtquelle aufweist. Auf diese Weise können auch für die Wellenlänge des Laserstrahls transparente optische Elemente auf die Funktionalität ihrer Oberfläche überprüft werden.

In der DE 10 2012 102 785 B3 ist eine Überwachungseinrichtung zur Erfassung und Überwachung der Verschmutzung einer optischen Komponente in einer Vorrichtung zur Lasermaterialbearbeitung beschrieben, weiche einen Prozess-Laserstrahl durch oder auf die optische Komponente emittiert. Die Überwachungseinrichtung umfasst eine Lichtquelle, die einen Messstrahl emittiert und unter einem Einfallswinkel auf eine Außenfläche der optischen Komponente projiziert, einen ersten Detektor, um die Intensität eines von der Außenfläche der Komponente unter einem Ausfallswinkel reflektierten Strahls zu erfassen, sowie einen zweiten Detektor, um die Intensität von diffus von der Außenfläche der Komponente gestreuter Streustrahlung zu erfassen, sowie eine Auswerteeinrichtung, die aus den erfassten Intensitäten ein Maß für den Grad der Verschmutzung der Komponente ermittelt.

Die DE 198 39 930 C1 beschreibt ein Verfahren zur Überwachung der Funktionalität eines transparenten Schutzelements einer Laseroptik, bei dem unter einem Winkel, der von der Einfallsrichtung des Laserstrahls abweicht, zusätzliches Licht in eine seitliche Fläche des Schutzelements eingekoppelt wird. Dieses durchquert das Material des Schutzelements und tritt sodann über die seitliche Fläche wieder aus, wo es von einem Lichtdetektor erfasst wird. Risse und Brüche des Schutzelements werden durch eine Veränderung des in dem Lichtdetektor empfangenen Lichts erkennbar. Diese Messung wird ggf. ergänzt durch die Messung einer Temperaturdifferenz zwischen zufließendem und abfließendem Kühlwasser sowie durch Strahlungs-Temperatursensoren, welche die lokale Temperaturverteilung im Schutzelement überwachen.

Die DE 10 2007 030 398 A1 beschreibt eine Vorrichtung zum Überwachen der Temperatur und/oder einer temperaturabhängigen Kenngröße eines im Strahlengang eines Laserstrahls angeordneten transmissiven optischen Elements. Die Vorrichtung umfasst mindestens eine Messlichtquelle zum Erzeugen und Aussenden von Messstrahlung auf das optische Element, mindestens einen Detektor zum Detektieren zumindest eines Teils der durch das optische Element hindurch getretenen Messstrahlung, sowie eine mit dem Detektor in Verbindung stehende Auswerteeinrichtung, welche die der Intensität der detektierten Messstrahlung zugeordnete Temperatur und/oder temperaturabhängige Kenngröße in einem Durchtrittsbereich der Messstrahlung überwacht.

Neben einer Veränderung der Oberflächenbeschaffenheit kann bei einem direkt mit einer Kühlflüssigkeit, z.B. mit Wasser, gekühlten optischen Element bei einem Bruch oder Riss in dem optischen Element Kühlflüssigkeit in die Umgebung austreten. Manche optische Elemente sind in Bereichen verbaut, in denen es erforderlich ist, den Austritt einer großen Menge an Kühlflüssigkeit zu vermeiden. Beispielsweise werden an optische Elemente, die in einer Vakuum-Umgebung angeordnet sind, z.B. in einem Laserresonator oder in einer EUV-Strahlungserzeugungsvorrichtung, in der Regel hohe Anforderungen an deren Ausgasung gestellt. Auch an optische Elemente, die in oder in der Nähe eines Hochfrequenz-Bereichs mit hohen Störfeldern angeordnet sind, wie sie beispielsweise bei einem Laserresonator eines Gaslasers auftreten, werden hohe Anforderungen hinsichtlich der Leckage gestellt. Zudem besteht bei derartigen optischen Elementen in der Regel das Problem, dass wenig Bauraum vorhanden ist.

In der WO2015/120889 A1 sind eine Einrichtung und ein Verfahren zum Schutz einer Vakuum-Umgebung vor Leckage an einer optischen Komponente beschrieben. Die Einrichtung weist eine Detektionseinrichtung zur Detektion einer Leckage an der optischen Komponente beim Überströmen eines Kühlmediums von einem Kühlbereich in die Vakuum-Umgebung auf. Der Kühlbereich kann einen Hohlraum in einer Fassung der optischen Komponente bilden, an den ein Teilbereich der Oberfläche der optischen Komponente angrenzt. Wird ein Überströmen des Kühlmediums von dem Kühlbereich in den Vakuum-Umgebung detektiert, kann eine Zuführungsleitung des Kühlmediums in den Kühlbereich gesperrt werden.

### Aufgabe der Erfindung

Der Erfindung liegt die Aufgabe zugrunde, eine Anordnung zur Überwachung eines optischen Elements, eine Laserquelle und eine EUV-Strahlungserzeugungsvorrichtung mit mindestens einer solchen Anordnung bereitzustellen, die eine effiziente Überwachung des optischen Elements auf eine Leckage ermöglichen.

### Gegenstand der Erfindung

Ein Aspekt der Erfindung betrifft eine Anordnung der eingangs genannten Art, bei der die Halterung einen mit einer Kühlflüssigkeit durchströmbaren Kühlbereich aufweist, der mit dem optischen Element in Kontakt steht und bei der die Halterung ein Reservoir zur Aufnahme von bei einer Leckage an dem optischen Element austretender Kühlflüssigkeit umfasst, durch das der Strahlengang zwischen der Lichtquelle und dem Detektor verläuft.

Erfindungsgemäß wird vorgeschlagen, das mit der Kühlflüssigkeit direkt gekühlte optische Element mittels der ohnehin in der Anordnung vorhandenen Kombination aus Lichtquelle und Detektor auf eine Leckage zu überwachen. Eine solche Leckage kann bei einem Riss bzw. Bruch des optischen Elements auftreten, bei dem Kühlflüssigkeit aus dem Kühlbereich an bzw. über das beschädigte optische Element in die Umgebung austritt. Für die Überwachung auf eine Leckage wird in der Anordnung, typischerweise in der Halterung, ein Flüssigkeits-Reservoir zur Aufnahme einer geringen Menge an Kühlflüssigkeit angebracht, durch das der Strahlengang zwischen der Lichtquelle und dem Detektor verläuft.

Wird das Reservoir ganz oder teilweise mit der Kühlflüssigkeit gefüllt, verändert sich die auf den Detektor auftreffende Intensität (oder äquivalent die auf den Detektor auftreffende Strahlungsleistung) gegenüber dem Fall, dass sich keine Kühlflüssigkeit in dem Reservoir befindet. In der Regel verringert sich durch das Vorhandensein der Kühlflüssigkeit die Intensität der auf den Detektor auftreffenden und an der Oberfläche reflektierten Strahlung. Das Vorhandensein der Kühlflüssigkeit in dem Reservoir kann z.B. eine Absorption, eine Brechung (Winkel- oder Divergenzänderung), eine Streuung, etc. der von der Lichtquelle ausgesandten Strahlung bewirken, die mit Hilfe des Detektors detektiert wird. Wird eine Leckage detektiert, kann eine Zuführungsleitung des Kühlmediums in den Kühlbereich gesperrt werden. Alternativ kann die Information verwendet werden, um einen realen Bruch mit Kühlmittelaustritt von anderen Fehlermeldungen zu unterscheiden (s.u.).

Bei einer Ausführungsform ist die Halterung derart ausgerichtet, dass das Reservoir sich in Schwerkraftrichtung unterhalb der (überwachten) Oberfläche des optischen Elements befindet. Das in der Halterung gebildete Reservoir erstreckt sich in der Regel in Umfangsrichtung über einen kleinen Winkelbereich von weniger als z.B. +/-30°. Um das Reservoir unterhalb der überwachten Oberfläche zu positionieren, ist es daher erforderlich, die Halterung geeignet auszurichten, d.h. entlang ihrer in horizontaler Richtung verlaufenden Längsachse so zu drehen bzw. zu orientieren, dass der Winkelbereich in Umfangsrichtung, an dem das Reservoir gebildet ist, sich unterhalb der überwachten Oberfläche befindet. Die Halterung ist in dem auf die oben beschriebene Weise ausgerichteten Zustand in der Regel mittels einer Fixiereinrichtung fixiert, die einen Teil der Anordnung bzw. einen Teil eines optischen Systems bildet, in welcher die Anordnung verbaut ist.

Durch die Anordnung des Reservoirs unterhalb der Oberfläche kann sichergestellt werden, dass unabhängig von dem Ort, an dem ein Riss oder ein Bruch an dem optischen Element auftritt, die Kühlflüssigkeit in das Reservoir gelangt. Das Reservoir ist in der Halterung typischerweise in Längsrichtung seitlich versetzt zum optischen Element bzw. zur überwachten Oberfläche angeordnet. Die Oberseite des Reservoirs befindet sich in der Regel in Schwerkraftrichtung auf einem Höhenniveau, das sich unterhalb des unteren Randes der überwachten Oberfläche befindet. Unter der überwachten Oberfläche des optischen Elements wird der frei liegende Teil der Oberfläche des optischen Elements verstanden, der nicht von der Halterung aufgenommen ist.

Bei einer Weiterbildung dieser Ausführungsform befindet sich ein der Oberfläche zugewandter oberer Randabschnitt des Reservoirs in Schwerkraftrichtung unterhalb eines der Oberfläche abgewandten oberen Randabschnitts des Reservoirs, oder umgekehrt. Der obere Rand des Reservoirs kann in diesem Fall beispielsweise gestuft ausgebildet sein oder unter einem Winkel zur Horizontalen geneigt ausgerichtet sein. In beiden Fällen kann einem Überlaufen des Reservoirs entgegengewirkt werden, indem überschüssige Kühlflüssigkeit nicht ohne weiteres über den der Oberfläche abgewandten oberen Randabschnitt des Reservoirs ablaufen und unerwünschter Weise in die Umgebung gelangen kann. Auch für den Fall, dass der der Oberfläche zugewandte Randabschnitt oberhalb des der Oberfläche abgewandten Randabschnitts liegt, kann das Volumen der Kühlflüssigkeit in dem Reservoir und somit im Strahlengang zwischen der Lichtquelle und dem Detektor auf ein maximales Volumen begrenzt bzw. ein Überlaufen verhindert werden, was die Detektion einer Leckage erleichtert.

Bei einer weiteren Ausführungsform ist das Reservoir in einer Ausnehmung, z.B. in einer Bohrung, in der Halterung gebildet, in der entweder die Lichtquelle oder der Detektor angeordnet ist. Die Halterung ist hierbei derart orientiert, dass entweder die Lichtquelle oder der Detektor in Schwerkraftrichtung unterhalb der zu überwachenden Oberfläche angeordnet ist. Eine Lichtaustrittsfläche der Lichtquelle bzw. eine Detektorfläche des Detektors bildet typischerweise den Boden der Ausnehmung oder einen Teilbereich des Bodens der Ausnehmung. Auf diese Weise ist sichergestellt, dass der Strahlengang von der Lichtquelle zum Detektor durch das Reservoir verläuft. Die Lichtquelle bzw. der Detektor sind typischerweise mit Hilfe von Dichtmitteln, z.B. von O-Ringen, oder dergleichen in die Halterung integriert, so dass keine Kühlflüssigkeit aus der Ausnehmung nach unten austreten kann. Dies ist erforderlich, da die Lichtquelle bzw. der Detektor typischerweise an ihrer der Ausnehmung abgewandten Rückseite elektrisch kontaktiert werden. Die Lichtquelle kann beispielsweise als Leuchtdiode oder als Laserdiode ausgebildet sein. Der Detektor kann beispielsweise als Fotodiode ausgebildet sein.

Bei einer weiteren Ausführungsform ist die Lichtquelle zum Aussenden der Strahlung auf die Oberfläche unter einem Winkel von mehr als 10° (und typischerweise von weniger als 30°) zur Schwerkraftrichtung und/oder der Detektor ist zur Detektion der an der Oberfläche unter einem Winkel von mehr als 10° (und typischerweise von weniger als 30°) zur Schwerkraftrichtung reflektierten Strahlung ausgebildet bzw. ausgerichtet. Dies wird typischerweise dadurch erreicht, dass die Längsachse der Lichtquelle und/oder die Längsachse des Detektors, die in der Regel mit der Richtung, in der die Strahlung aus der Lichtquelle austritt bzw. mit der Richtung, in welcher die Strahlung auf den Detektor trifft, übereinstimmen, unter einem entsprechenden Winkel von mehr als 10° zur Schwerkraftrichtung ausgerichtet sind.

Bei der zu überwachenden Oberfläche kann es sich um eine plane Oberfläche handeln, die in Schwerkraftrichtung verläuft. Insbesondere in diesem Fall sind die Lichtquelle und der Detektor in der Regel unter dem gleichen Winkel zur zu überwachenden Oberfläche des optischen Elements ausgerichtet. Bei der zu überwachenden Oberfläche kann es sich auch um eine gekrümmte und/oder zur Schwerkraftrichtung verkippte Oberfläche handeln. Die Lichtquelle ist bevorzugt so ausgebildet bzw. so positioniert, dass die ausgesandte Strahlung (ohne das Vorhandensein der Kühlflüssigkeit im Strahlengang) mittig auf die zu überwachende Oberfläche des optischen Elements ausgerichtet ist.

Die Ausrichtung der Lichtquelle oder des Detektors unter einem Winkel zur Schwerkraftrichtung ist günstig, da in diesem Fall bei einer Leckage die von der Lichtquelle ausgesandte Strahlung unter einem entsprechenden Winkel durch die horizontal ausgerichtete Oberfläche der Kühlflüssigkeit tritt und hierbei eine Brechung erfährt, die eine Ablenkung der aus der Kühlflüssigkeit austretenden bzw. in die Kühlflüssigkeit eintretenden Strahlung von einer nominellen Strahlrichtung (ohne das Vorhandensein der Kühlflüssigkeit) bewirkt. Bei einem ausreichend großen Ablenkwinkel detektiert der Detektor daher signifikant weniger Strahlung als dies ohne das Vorhandensein der Kühlflüssigkeit der Fall wäre. Anhand der reduzierten detektierten Intensität kann eine Leckage erkannt werden, wie weiter unten näher beschrieben ist.

Für den Fall, dass die Halterung so orientiert ist, dass die Lichtquelle im Wesentlichen am tiefsten Punkt der Halterung positioniert ist, spielt die Länge des Strahlwegs der ausgesandten Strahlung innerhalb der Ausnehmung praktisch keine Rolle, da die Kühlflüssigkeit in jedem Fall als optischer Keil wirkt. Für den Fall, dass die Halterung so orientiert ist, dass der Detektor im Wesentlichen am tiefsten Punkt der Halterung angeordnet ist, ist es günstig, wenn die Ausnehmung, in welcher der Detektor angeordnet ist und die Kühlflüssigkeit aufnimmt, eine vergleichsweise große Länge und/oder eine geringe Breite aufweist, so dass die Strahlung beim Eintritt in die Kühlflüssigkeit nahezu vollständig zum seitlichen Rand der Ausnehmung hin gebrochen wird und nicht auf den Detektor auftrifft.

Bei einer weiteren Ausführungsform weist die Lichtquelle eine (konvex) gekrümmte Lichtaustrittsfläche auf. Dies ist typischerweise bei einer Lichtquelle in Form einer Leuchtdiode der Fall, bei der die Lichtaustrittsfläche in der Regel sphärisch gekrümmt ist und als Sammellinse wirkt. Ist die Halterung so orientiert, dass sich die Lichtquelle und die darüber gebildete Ausnehmung unterhalb der zu überwachenden Oberfläche des optischen Elements befinden, wird durch die Benetzung der Lichtaustrittsfläche mit der Kühlflüssigkeit, beispielsweise mit Wasser, die Funktion der Lichtaustrittsfläche als Sammellinse gestört. Wird diese Funktion reduziert, divergiert die von der Lichtquelle ausgesandte Strahlung stärker als dies ohne das Vorhandensein der Kühlflüssigkeit der Fall wäre, wodurch ebenfalls die detektierte Strahlungsintensität auf dem Detektor abnimmt und entsprechend eine Leckage an dem optischen Element detektiert werden kann.

Bei einer weiteren Ausführungsform ist die Lichtquelle zum Aussenden von Strahlung im IR-Wellenlängenbereich ausgebildet. Der Detektor ist entsprechend angepasst und ebenfalls zur Detektion von Strahlung im IR-Wellenlängenbereich ausgebildet. Die von der Lichtquelle ausgesandte Strahlung weist in diesem Fall typischerweise Wellenlängen bzw. eine Wellenlänge im IR-Wellenlängenbereich zwischen ca. 1 µm und ca. 2 µm auf, da dort ein starkes Absorptionsband von Wasser liegt, welches in diesem Fall typischerweise als Kühlflüssigkeit verwendet wird. Beim Durchtritt durch die Kühlflüssigkeit wird die Strahlung der Lichtquelle daher absorbiert, so dass auf diese Weise ebenfalls eine Leckage detektiert werden kann. Eine derartige "Lichtschranke" zur Erkennung von Wasser - ohne eine Reflexion bzw. Umlenkung über die Oberfläche eines optischen Elements - ist kommerziell erhältlich, vgl. beispielsweise das Datenblatt von BOH TJ-T80-001-01-S49F der Fa. Balluff (www.balluff.com) mit einer Wellenlänge der Lichtquelle, die bei ca. 1480 nm liegt. Bei einer weiteren Ausführungsform weist die Halterung eine Zuführungskontur zum Zuführen der Kühlflüssigkeit von dem optischen Element in das Reservoir auf. Wie weiter oben beschrieben wurde, ist es günstig, wenn die Halterung so orientiert ist, dass das Reservoir, z.B. in Form der Ausnehmung, nahezu am tiefsten Punkt der Halterung angeordnet ist, so dass aus dem optischen Element austretende Kühlflüssigkeit in die Ausnehmung läuft. Um bereits kleinste Mengen von austretender Kühlflüssigkeit detektieren zu können, ist es günstig, wenn die an dem optischen Element austretende Kühlflüssigkeit gezielt in Richtung auf das Reservoir geleitet bzw. dem Reservoir zugeführt wird. Damit wird die Reaktionszeit beschleunigt und die Sicherheit erhöht, dass die austretende Kühlflüssigkeit nicht am Detektions-Reservoir vorbei läuft. Die Zuführungskontur kann auf unterschiedliche Weise ausgebildet sein.

Bei einer Weiterbildung dieser Ausführungsform handelt es sich bei der Zuführungskontur um eine Zuführschräge, die sich zwischen einem der Oberfläche benachbarten Innenrand der Halterung und dem Reservoir erstreckt. Bei der Zuführschräge kann es sich beispielsweise um eine rotationssymmetrisch zu einer Längsachse der Halterung verlaufende Kontur handeln, z.B. um eine konische oder gekürmmte Fläche. Es ist alternativ oder zusätzlich möglich, eine Zuführungskontur in Form einer rinnenförmigen Vertiefung oder dergleichen in der Halterung vorzusehen, entlang derer die Kühlflüssigkeit von dem optischen Element in Richtung auf das Reservoir geleitet wird. Die Zuführungskontur kann an dem der Oberfläche benachbarten Innenrand der Halterung eine vergleichsweise große Breite aufweisen, die sich in Richtung auf das Reservoir reduziert, um möglichst die gesamte aus dem optischen Element austretende Kühlflüssigkeit in das Reservoir zu leiten.

Bei einer weiteren Ausführungsform weist die Anordnung eine Zuführungseinrichtung zur Zuführung der Kühlflüssigkeit zu dem Kühlbereich auf, der typischerweise einen Hohlraum in der Halterung bildet. Die Zuführungseinrichtung west typischerweise eine Zuführungsleitung auf, die über eine Eintrittsöffnung in der Halterung in dem Kühlbereich innerhalb der Halterung mündet. Die Zu- und Abführung der Kühlflüssigkeit kann beispielsweise auf die in der weiter oben zitierten WO2017/063686A beschriebene Weise erfolgen, die durch Bezugnahme in ihrer Gesamtheit zum Inhalt dieser Anmeldung gemacht wird.

Der Kühlbereich kann beispielsweise einen ringförmigen Hohlraum in der Halterung bilden, welcher das optische Element umgibt und z.B. an dessen umlaufender Seitenfläche mit dem optischen Element in Kontakt steht. Der Kühlbereich weist typischerweise eine Austrittsöffnung auf, um die Kühlflüssigkeit aus dem Kühlbereich abzuführen. Über die Austrittsöffnung kann die Kühlflüssigkeit mittels einer Abführungsleitung einer Kühleinrichtung zugeführt werden, welche die von der Kühlflüssigkeit aufgenommene Wärme an die Umgebung oder an ein anderes Medium abgibt. Die Kühleinrichtung, die Zuführungsleitung sowie die Abführungsleitung können einen geschlossenen Kühlkreislauf bilden. Alternativ kann die erwärmte Kühlflüssigkeit - beispielsweise bei der Verwendung von Kühlwasseran die Umgebung abgegeben werden.

Bei einer weiteren Ausführungsform weist die Anordnung eine Auswerteeinrichtung zum Vergleichen der Intensität der vom Detektor detektierten Strahlung mit einer Referenz-Intensität auf, wobei die Auswerteeinrichtung bevorzugt zur Ausgabe eines Fehler-Signals und/oder zur Ausgabe eines Steuersignals zum Deaktivieren der Zuführungseinrichtung ausgebildet ist, wenn die Intensität der vom Detektor detektierten Strahlung um einen vorgegebenen Wert (Schwellwert) von der Referenz-Intensität abweicht. Bei der Auswerteeinrichtung kann es sich beispielsweise um einen Mikroprozessor oder dergleichen handeln. Wie dies in der eingangs zitierten EP1398612B1 beschrieben ist, welche durch Bezugnahme in ihrer Gesamtheit zum Inhalt dieser Anmeldung gemacht wird, wird die Intensität der detektierten Strahlung mit einer Referenz-Intensität verglichen, die in der Auswerteeinrichtung hinterlegt ist. Weicht die Intensität der vom Detektor detektierten Strahlung um den vorgegebenen Wert von der Referenz-Intensität ab, kann die Abweichung auf eine Beschädigung oder Alterung der Oberfläche zurückzuführen sein, wie dies in der EP1398512B1 beschrieben ist, oder auf das Vorliegen einer Leckage, wie dies weiter oben beschrieben ist.

Es ist nicht zwingend erforderlich, dass beide Fälle voneinander unterschieden werden, da in beiden Fällen ein Fehler vorliegt. Falls eine Unterscheidung der beiden Fehlerfälle vorgenommen werden soll, können für beide Fälle jeweils unterschiedliche Schwellwerte vorgegeben werden, welche zur Ausgabe eines jeweils unterschiedlichen Fehler-Signals und/oder Steuersignals führen. Alternativ oder zusätzlich kann die zeitliche Entwicklung der vom Detektor detektierten Intensität für die Unterscheidung herangezogen werden: Eine Veränderung der Oberflächenbeschaffenheit vollzieht sich typischerweise auf einer vergleichsweise langen Zeitskala, während eine Leckage in einem vergleichsweise kurzen Zeitraum zu einer Abnahme der detektierten Intensität führt.

Die Tatsache, dass die Oberfläche der in dem Reservoir befindlichen Kühlflüssigkeit in der Regel nicht ruhig und eben ist, sondern zeitlich fluktuiert, wirkt sich auf die Detektion praktisch nicht aus: Die Auswertung der detektierten Intensität mittels der Auswerteeinrichtung kann kurzfristige Fluktuationen und sehr kurze Abweichungen der Intensität von dem Referenz-Wert um den vorgegebenen Wert berücksichtigen.

Die Auswerteeinrichtung kann ein Fehler-Signal ausgeben, um einem Bediener anzuzeigen, dass eine manuelle Trennung des Kühlbereichs von der Kühleinrichtung bzw. von der Zuführungseinrichtung (sowie eine Abschaltung des Lasers bzw. des Laserstrahls) erforderlich ist. Alternativ kann eine automatisierte Trennung erfolgen, indem die Auswerteeinrichtung ein Steuersignal ausgibt, das der Zuführungseinrichtung zu deren Deaktivierung zugeführt wird. Die Deaktivierung kann beispielsweise darin bestehen, dass eine Zuführungsleitung der Zuführungseinrichtung verschlossen wird, beispielsweise indem ein zu diesem Zweck vorgesehenes steuerbares Ventil geschlossen wird, welches mittels des Steuersignals in eine geeignete Schaltstellung geschaltet wird. Liegt eine Leckage vor, wird von der Auswerteeinrichtung typischerweise auch ein Steuersignal zu Abschalten der (Laser-)strahlquelle ausgegeben.

Die hier beschriebene Anordnung umfasst typischerweise auch das optische Element, dessen Oberfläche überwacht wird und das typischerweise mit seinem seitlichen Rand in der Halterung aufgenommen ist. Das optische Element bzw. dessen Substrat-Material kann beispielsweise aus Zinkselenid (ZnS), GalliumArsenid (GaAs) oder aus Diamant gebildet sein. Die Anordnung ist typischerweise in einem optischen System verbaut, wobei insbesondere die Halterung im Einbauzustand so ausgerichtet ist, dass sich das Reservoir in Schwerkraftrichtung unterhalb der zu überwachenden Oberfläche des optischen Elements befindet (s.o.). Die Halterung kann hierbei mittels einer Fixiereinrichtung, z.B. mit Hilfe von Fixierschrauben, in ihrer Ausrichtung fixiert werden. Die zu überwachende Oberfläche des optischen Elements ist hierbei in der Regel im Wesentlichen parallel zur Schwerkraftrichtung ausgerichtet, dies ist aber nicht zwingend erforderlich.

Ein weiterer Aspekt der Erfindung betrifft eine Laserquelle, insbesondere eine CO₂-Laserquelle, die eine Anordnung wie weiter oben beschrieben zur Überwachung eines optischen Elements, insbesondere eines Auskoppelspiegels oder eines Auskoppelfensters der Laserquelle, umfasst. Die Anordnung kann zur Überwachung einer Oberfläche des Auskoppelspiegels bzw. -fensters dienen, die einer Innenseite eines Laserresonators der Laserquelle zugewandt ist. Die Anordnung kann auch zur Überwachung einer dem Laserresonator abgewandten Außenseite des Auskoppelspiegels oder -fensters dienen, wie dies in der eingangs zitierten EP139612B1 beschrieben ist.

Ein Aspekt der Erfindung betrifft eine EUV-Strahlungserzeugungsvorrichtung, die eine Anordnung wie weiter oben beschrieben zur Überwachung eines optischen Elements aufweist. Bei dem optischen Element kann es sich um ein optisches Element einer Laserquelle handeln, beispielsweise um den weiter oben beschriebenen Auskoppelspiegel oder um ein Auskoppelfenster der Laserquelle. Das optische Element kann auch außerhalb der Laserquelle angeordnet sein. Beispielsweise kann es sich um ein Fenster eines optischen Verstärkers handeln, der einen Teil einer Treiberlaseranordnung der EUV-Strahlungserzeugungsvorrichtung bildet. Auch ein optisches Element einer EUV-Strahlungserzeugungsvorrichtung, welches zur Trennung einer Vakuum-Umgebung von einer Strahlzuführung zur Zuführung eines Laserstrahls in die Vakuum-Umgebung ausgebildet ist, wie dies in der eingangs zitierten WO2017/063686A1 beschrieben ist, kann mittels der weiter oben beschriebenen Anordnung überwacht werden.

Bei allen weiter oben beschriebenen Beispielen kann die Überwachung des optischen Elements auf Leckage ohne zusätzliche Bauteile wie beispielsweise einen Wassersensor erfolgen, so dass die Leckage-Überwachung kostengünstig durchgeführt werden kann. Für die Leckage-Überwachung wird zudem praktisch kein zusätzlicher Bauraum benötigt.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1a-c: drei schematische Längsschnitte einer Anordnung zur Überwachung eines Auskoppelspiegels einer Laserquelle auf Leckage, sowie
- Fig. 2: eine schematische Darstellung einer EUV-Strahlungserzeugungsvorrichtung mit einer solchen Laserquelle.

In der folgenden Beschreibung der Zeichnungen werden für gleiche bzw. funktionsgleiche Bauteile identische Bezugszeichen verwendet.

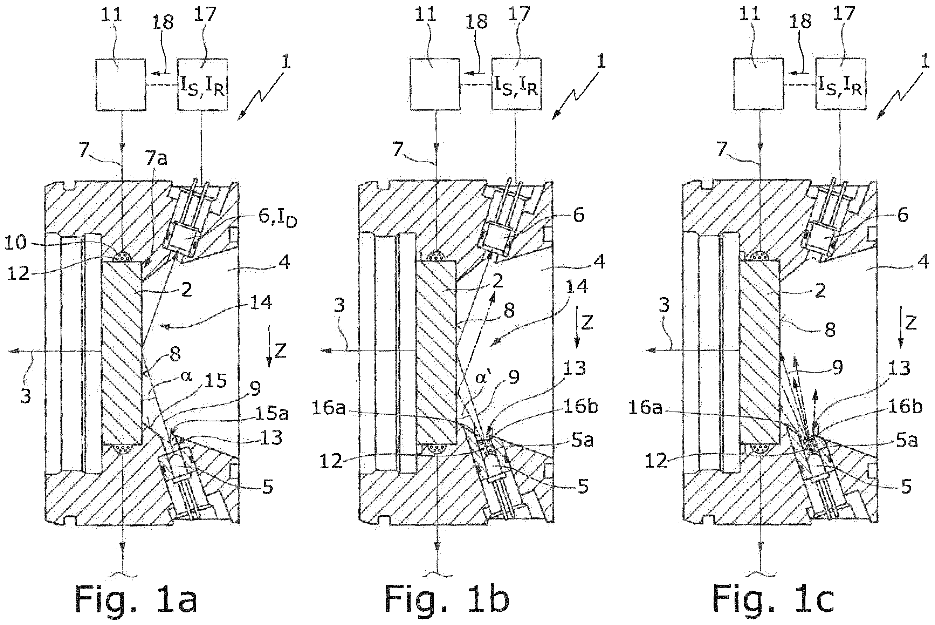

**Fig. 1a****-c** zeigen eine Anordnung **1** zum Überwachen eines optischen Elements in Form eines Auskoppelspiegels **2** einer Laserquelle auf Funktionalität sowie auf eine mögliche Leckage. Mittels des teildurchlässigen Auskoppelspiegels 2 wird ein Laserstrahl **3** aus einem Laserresonator **4** der Laserquelle ausgekoppelt. Alternativ zu dem hier beschriebenen Auskoppelspiegel 2 kann es sich bei dem zu überwachenden optischen Element auch um ein (teil-)transmissives Auskoppelfenster des Laserresonators 4 handeln.

Die Anordnung 1 umfasst eine im gezeigten Beispiel als Leuchtdiode ausgebildete Lichtquelle **5** und einen im gezeigten Beispiel als Fotodiode ausgebildeten Detektor **6,** die beide auf der dem Laserresonator 4 zugewandten Seite des Auskoppelspiegels 2 in eine Halterung **7** des Auskoppelspiegels 2 integriert sind. Dabei liegen die Lichtquelle 5 und der Detektor 6 bezüglich des Auskoppelspiegels 2 einander diametral gegenüber und sind unter dem gleichen Winkel **α** zu einer dem Laserresonator 4 zugewandten, planen reflektierenden Oberfläche **8** des Auskoppelspiegels 2 sowie in Längsrichtung der Halterung 7 seitlich versetzt zu dem Auskoppelspiegel 2 ausgerichtet. Die Leuchtdiode 5 und die Fotodiode 6 bilden gleichzeitig einen Abschluss des resonatorinternen Vakuums gegen die Atmosphäre.

Die von der Lichtquelle 5 mit einer Referenz-Intensität **I_{R}** abgestrahlte Strahlung **9** ist mittig auf die Oberfläche 8 des Auskoppelspiegels 2 ausgerichtet. Die Lichtquelle 5 ist zum Aussenden der Strahlung 9 unter einem Winkel α von mehr als 10° und von weniger als 30°, im gezeigten Beispiel von 20°, zur Oberfläche des Auskoppelspiegels 2 ausgebildet bzw. unter einem solchen Winkel α zur Oberfläche 8 des Auskoppelspiegels 2 angeordnet. Der Detektor 6 ist entsprechend ausgebildet bzw. ausgerichtet, um die von der Oberfläche 8 auf den gegenüberliegenden Detektor 6 reflektierte Strahlung 9 mit einer Strahlungsintensität **I_{D}** zu detektieren.

Die Halterung 7 der Anordnung 1 weist einen Kühlbereich **10** auf, bei dem es sich um einen ringförmigen Hohlraum handelt, der entlang einer kreisförmigen Umfangsfläche des Auskoppelspiegels 2 verläuft. Eine Zuführungseinrichtung **11** dient zur Zuführung einer Kühlflüssigkeit **12** in den Kühlbereich 10 über eine in der Halterung 7 gebildete Eintrittsöffnung. Die Kühlflüssigkeit 12 steht in dem Kühlbereich 10 in direktem Kontakt mit dem Auskoppelspiegel 2, um diesen zu kühlen. An der diametral entgegengesetzten Seite des ringförmigen Kühlbereichs 10 ist eine Austrittsöffnung gebildet, über welche die erwärmte Kühlflüssigkeit die Halterung 7 verlässt und über eine Abführungsleitung abgeführt wird.

Die Halterung 7 ist so angeordnet, dass die zu überwachende Oberfläche 8 des Auskoppelspiegels 2 in Schwerkraftrichtung **Z,** d.h. vertikal, ausgerichtet ist. Die Halterung 7 ist zusätzlich derart orientiert, d.h. derart um ihre (horizontal verlaufende) Längsachse gedreht, das die Lichtquelle 5 und der Detektor 6 in Schwerkraftrichtung Z übereinander positioniert sind. Entsprechend sind im gezeigten Beispiel sowohl die Lichtquelle 5 als auch der Detektor 6 unter einem Winkel α von 20° zur Schwerkraftrichtung Z ausgerichtet. Bei der gezeigten Ausrichtung der Halterung 7 ist die Lichtquelle 5 in Schwerkraftrichtung Z unterhalb der frei liegenden Oberfläche 8 des Auskoppelspiegels 2 angeordnet, d.h. unterhalb desjenigen Teils der Oberfläche 8, der nicht in der Halterung 7 aufgenommen ist. Entsprechend ist auch eine Ausnehmung **13** in Form einer Bohrung in der Halterung 7, an deren Boden die Lichtquelle 5 angeordnet ist, unterhalb der frei liegenden Oberfläche 8 des Auskoppelspiegels 2 angeordnet.

Kommt es zu einem Riss oder einem Bruch in dem Auskoppelspiegel 2, kann Kühlflüssigkeit 12 über den Auskoppelspiegel 2 in den Laserresonator 4 eintreten. Um eine solche Leckage möglichst schnell zu detektieren, kann die unterhalb der Oberfläche 8 angeordnete Ausnehmung 13 als Reservoir zur Aufnahme der ausgetretenen Kühlflüssigkeit 12 dienen, wie dies in Fig. 1b und in Fig. 1c dargestellt ist. Der Strahlengang **14** der Strahlung 9 zwischen der Lichtquelle 5 und dem Detektor 6 verläuft hierbei durch die Ausnehmung 13 hindurch. Die Ausnehmung 13 ist ebenfalls schräg zur Oberfläche 8 des Auskoppelspiegels 2 ausgerichtet, und zwar unter dem Winkel α von 20°. Die Halterung 7 weist eine konisch verlaufende Innenkontur **15** auf, die sich von einem der Oberfläche 8 benachbarten Innenrand **7a** der Halterung 7, der einen minimalen Innendurchmesser der Halterung 7 bildet, in Längsrichtung der Halterung 7 zu der Ausnehmung 13 hin erstreckt. Die konische Innenkontur 15 bildet eine Zuführungskontur in Form einer Zuführungsschräge, um die an dem Auskoppelspiegel 2 austretende Kühlflüssigkeit 12 der Ausnehmung 13 zuzuführen. Die konisch oder ggf. abgerundet verlaufende Zuführungsschräge 15 kann sich in Längsrichtung auch nur über einen Teilbereich der Halterung 7 zwischen dem Innenrand 7a und der Ausnehmung 13 erstrecken.

Der obere Rand der Ausnehmung 13, der an die Zuführungsschräge 15 angrenzt, verläuft entsprechend schräg zur Horizontalen und weist einen ersten, der Oberfläche 8 des Auskoppelspiegels 2 zugewandten Randabschnitt **16a** auf, über den die Kühlflüssigkeit 12 in die Ausnehmung 13 eintritt. Das Reservoir 13 weist auch einen zweiten, der Oberfläche 8 des Auskoppelspiegels in Längsrichtung abgewandten Randabschnitt **16b** auf, der sich in Schwerkraftrichtung Z oberhalb des ersten Randabschnitts 16a befindet und auf diese Weise dem Austritt von überschüssiger Kühlflüssigkeit 12 aus dem Reservoir 13 in einen der Oberfläche 8 abgewandten Bereich der Halterung 7 entgegenwirkt, d.h. der obere Rand des Reservoirs 13 verläuft gestuft. An den zweiten Randabschnitt 16b schließt sich in Längsrichtung eine weitere konisch verlaufende Fläche an. Wie in Fig. 1a-c gestrichelt dargestellt ist, weist die Halterung 7 zwischen den beiden oberen Randabschnitten 16a,b eine in Umfangsrichtung umlaufende rinnenförmige Vertiefung 15a auf, die ebenfalls eine Zuführungskontur bildet, um die Kühlflüssigkeit 12 in Umfangsrichtung dem Reservoir 13 zuzuführen.

Wie in Fig. 1b zu erkennen ist, weist die mit der Kühlflüssigkeit 12 befüllte schräge Bohrung bzw. Ausnehmung 13, durch welche die Strahlung 9 der Lichtquelle 5 tritt, eine Keilform auf. Die von der Lichtquelle 5 ausgesandte Strahlung 9 trifft daher unter einem Winkel α von 20° zur Normalenrichtung auf die Oberfläche der Kühlflüssigkeit 12. An der Oberfläche der Kühlflüssigkeit 12 tritt die Strahlung 9 in die Vakuum-Umgebung innerhalb des Laserresonators 4 über und wird hierbei an der Oberfläche der Kühlflüssigkeit 12 gebrochen. Handelt es sich bei der Kühlflüssigkeit 12 wie im vorliegenden Beispiel um Wasser mit einem Brechungsindex n von ca. 1,33, wird die Strahlung 9 beim Durchtritt durch die Oberfläche der Kühlflüssigkeit 12 um ca. 7° abgelenkt, d.h. diese trifft unter einem Winkel a' von ca. 13° auf die Oberfläche 8 des Auskoppelspiegels 2 auf. Aufgrund dieser Ablenkung wird die vom Detektor 6 detektierte Intensität I_{D} gegenüber dem Fall ohne das Vorhandensein der Kühlflüssigkeit 12 in der Ausnehmung 13 deutlich verringert.

Wie in Fig. 1c zu erkennen ist, weist die Lichtquelle in Form der Leuchtdiode 5 eine sphärisch gekrümmte Lichtaustrittsfläche **5a** auf, die als Sammellinse dient. Beim Vorhandensein der Kühlflüssigkeit 12 in der Ausnehmung 13 wird die Lichtaustrittsfläche 5a von der Kühlflüssigkeit 12 benetzt, was die Wirkung der Lichtaustrittsfläche 5a als Sammellinse verringert. Es tritt daher der in Fig. 1c dargestellte Effekt auf, dass die Strahlung 9 divergent aus der Leuchtdiode 5 austritt, was ebenfalls die vom Detektor 6 detektierte Intensität I_{D} verringert.

Die vom Detektor 6 detektierte Intensität I_{D} der Strahlung 9 kann beim Vorhandensein der Kühlflüssigkeit 12 in der Ausnehmung 13 zusätzlich dadurch reduziert werden, dass die Lichtquelle 5 die Strahlung 9 bei einer Wellenlänge aussendet, in der ein Absorptionsband der Kühlflüssigkeit 12 liegt. Beispielsweise kann die Lichtquelle 5 ausgebildet sein, die Strahlung 9 im IR-Wellenlängenbereich zwischen ca. 1 µm und ca. 2 µm auszusenden. Beim Durchlaufen der Kühlflüssigkeit 12 wird in diesem Fall ein Teil der Strahlung 9 in der Kühlflüssigkeit absorbiert, so dass ebenfalls die am Detektor 6 detektierte Intensität I_{D} der Strahlung 9 reduziert wird. Alternativ kann die Lichtquelle 5 ausgebildet sein, Strahlung 9 im sichtbaren oder einem anderen Wellenlängenbereich auszusenden.

Die am Detektor 6 gemessene Intensität I_{D} der reflektierten Strahlung 9 hängt neben dem Vorhandensein oder dem Nicht-Vorhandensein der Kühlflüssigkeit 12 in dem Reservoir 13 auch von der Beschaffenheit der Oberfläche 8 ab und ist daher ein Maß für Beschädigungen und Alterung der Oberfläche 8 des Auskoppelspiegels 2. Die vom Detektor 6 detektierte Strahlungsintensität I_{D} wird einer Auswerteeinrichtung **17,** z.B. einem Mikroprozessor, zugeführt, um die detektierte Lichtintensität I_{D} mit einer gespeicherten Referenz-Intensität I_{R} zu vergleichen. Als Referenz-Intensität I_{R} kann z.B. die mit einem neuwertigen Auskoppelspiegel 2 gemessene Lichtintensität I_{D} (ohne Leckage) verwendet werden. Weicht die vom Detektor 6 gemessene Lichtintensität I_{D} um einen vorgegebenen, definierten Wert I_{S} (Schwellwert) von der gespeicherten Referenz-Intensität I_{S} ab, gibt die Auswerteeinrichtung 17 eine Fehlermeldung bzw. ein Fehlersignal aus, schaltet den Laser ab und deaktiviert die Zuführungseinrichtung 11, um die weitere Zuführung von Kühlflüssigkeit 12 in den Kühlbereich zu verhindern. Zu diesem Zweck gibt die Auswerteeinrichtung 17 ein Steuersignal **18** an die Zuführungseinrichtung 11 aus, das auf ein steuerbares Ventil einwirkt. Soll eine Unterscheidung des Vorliegens einer Leckage oder einer Alterung des Auskoppelspiegels 2 vorgenommen werden, können ggf. zwei unterschiedliche Schwellwerte I_{S} in der Auswerteeinrichtung 17 verwendet werden.

Zusätzlich oder alternativ zu der in Fig. 1a-c gezeigten Überwachung der dem Laserresonator 4 zugewandten Oberfläche 8 des Auskoppelspiegels 2 kann auch die dem Laserresonator 4 abgewandte Oberfläche des Auskoppelspiegels 2 auf die weiter oben beschriebene Weise überwacht werden.

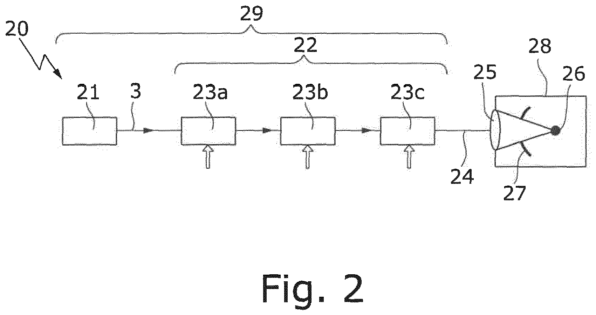

Die in Fig. 1a-c gezeigte Anordnung 1 mit dem Laserresonator 4 kann beispielsweise als CO₂-Laserquelle **21** in einer EUV-Strahlungserzeugungsvorrichtung **20** eingesetzt werden, wie sie in **Fig. 2** dargestellt ist. Die EUV-Strahlungserzeugungsvorrichtung 20 umfasst zusätzlich zu der Laserquelle 21eine Verstärkeranordnung **22** mit drei optischen Verstärkern bzw. Verstärkerstufen **23a-c,** eine nicht näher dargestellte Strahlführungseinrichtung **24** sowie eine Fokussiereinrichtung **25.** Die Fokussiereinrichtung 25 dient dazu, den von der Laserquelle 21 erzeugten und von den Verstärkeranordnung 22 verstärkten Laserstrahl 3, der an dem in Fig. 1a-c gezeigten Auskoppelspiegel 2 austritt, an einem Zielbereich in einer Vakuum-Kammer **28** zu fokussieren, in dem ein Target-Material **26** eingebracht ist. Das Target-Material 26 geht bei der Bestrahlung mit dem Laserstrahl 3 in einen Plasma-Zustand über und emittiert hierbei EUV-Strahlung, die mittels eines Kollektorspiegels **27** fokussiert wird. Die Laserquelle 21 bildet gemeinsam mit der Verstärkeranordnung 22 eine Treiberlaseranordnung **29** der EUV-Strahlungserzeugungsvorrichtung 20. Die in Fig. 1a-c gezeigte Anordnung 1 kann auch zur Überwachung von optischen Elementen der EUV-Strahlungserzeugungsvorrichtung 20 dienen, die außerhalb der Laserquelle 21 angeordnet sind, beispielsweise zur Überwachung von (Auskoppel-)Fenstern der Verstärkerstufen 23a-c oder zur Überwachung der Fokussiereinrichtung 25 oder ggf. eines Fensters, welches die Strahlführungseinrichtung 24 von der Vakuum-Kammer 28 trennt.

## Patentansprüche

1. Anordnung (1) zur Überwachung eines optischen Elements (2), umfassend:
eine Lichtquelle (5) zum Aussenden von Strahlung (9) auf eine Oberfläche (8) des optischen Elements (2),
einen Detektor (6) zur Detektion der an der Oberfläche (8) des optischen Elements (2) zumindest teilweise reflektierten Strahlung (9),
eine Halterung (7) für das optische Element (2), in welche die Lichtquelle (5) und der Detektor (6) integriert sind,
**dadurch gekennzeichnet,**
**dass** die Halterung (7) einen mit einer Kühlflüssigkeit (12) durchströmbaren Kühlbereich (10) aufweist, der mit dem optischen Element (2) in Kontakt steht, und
**dass** die Halterung (7) ein Reservoir (13) zur Aufnahme von bei einer Leckage an dem optischen Element (2) austretender Kühlflüssigkeit (12) umfasst, durch das der Strahlengang (14) zwischen der Lichtquelle (5) und dem Detektor (6) verläuft.

2. Anordnung nach Anspruch 1, bei der die Halterung (7) derart ausgerichtet ist, dass das Reservoir (13) sich in Schwerkraftrichtung (Z) unterhalb der Oberfläche (8) des optischen Elements (2) befindet.

3. Anordnung nach Anspruch 2, bei der sich ein der Oberfläche (8) zugewandter oberer Randabschnitt (16a) des Reservoirs (13) in Schwerkraftrichtung (Z) unterhalb eines der Oberfläche (8) abgewandten oberen Randabschnitts (16b) des Reservoirs (13) befindet, oder umgekehrt.

4. Anordnung nach einem der vorhergehenden Ansprüche, bei der das Reservoir eine Ausnehmung (13) in der Halterung (7) bildet, in der entweder die Lichtquelle (5) oder der Detektor (6) angeordnet ist.

5. Anordnung nach einem der vorhergehenden Ansprüche, bei der die Lichtquelle (5) zum Aussenden der Strahlung (9) auf die Oberfläche (8) unter einem Winkel (a) von mehr als 10° zur Schwerkraftrichtung (Z) und/oder der Detektor (6) zur Detektion der an der Oberfläche (8) unter einem Winkel (a) von mehr als 10° zur Schwerkraftrichtung (Z) reflektierten Strahlung (9) ausgebildet ist/sind.

6. Anordnung nach einem der vorhergehenden Ansprüche, bei welcher die Lichtquelle (5) eine gekrümmte Lichtaustrittsfläche (5a) aufweist.

7. Anordnung nach einem der vorhergehenden Ansprüche, bei welcher die Lichtquelle (5) zum Aussenden von Strahlung (9) im IR-Wellenlängenbereich ausgebildet ist.

8. Anordnung nach einem der vorhergehenden Ansprüche, bei der die Halterung (7) eine Zuführungskontur (15, 15a) zum Zuführen der Kühlflüssigkeit (12) von dem optischen Element (2) in das Reservoir (13) aufweist.

9. Anordnung nach Anspruch 8, bei der die Zuführungskontur eine Zuführschräge (15) umfasst, die sich zwischen einem der Oberfläche (8) benachbarten Innenrand (7a) der Halterung (7) und dem Reservoir (13) erstreckt.

10. Anordnung nach einem der vorhergehenden Ansprüche, weiter umfassend: eine Zuführungseinrichtung (11) zur Zuführung der Kühlflüssigkeit (12) zu dem Kühlbereich (10).

11. Anordnung nach einem der vorhergehenden Ansprüche, weiter umfassend: eine Auswerteeinrichtung (17) zum Vergleichen der Intensität (I_{D}) der von dem Detektor (6) detektierten Strahlung (9) mit einer Referenz-Intensität (I_{R}), wobei die Auswerteeinrichtung (17) bevorzugt zur Ausgabe eines Fehler-Signals und/oder zur Ausgabe eines Steuersignals (18) zum Deaktivieren der Zuführungseinrichtung (11) ausgebildet ist, wenn die Intensität (I_{D}) der von dem Detektor (6) detektierten Strahlung (9) um einen vorgegebenen Wert (I_{S}) von der Referenz-Intensität (I_{R}) abweicht.

12. Laserquelle (21), insbesondere CO₂-Laserquelle, umfassend: eine Anordnung (1) nach einem der vorhergehenden Ansprüche zur Überwachung eines optischen Elements, insbesondere eines Auskoppelspiegels (2) oder eines Auskoppelfensters, der Laserquelle (21).

13. EUV-Strahlungserzeugungsvorrichtung (20), umfassend: eine Anordnung (1) nach einem der Ansprüche 1 bis 11 zur Überwachung eines optischen Elements (2).

## Claims

1. An arrangement (1) for monitoring an optical element (2), comprising: a light source (5) for emitting radiation (9) onto a surface (8) of the optical element (2),
a detector (6) for detecting the radiation (9) that is at least partially reflected at the surface (8) of the optical element (2),
a holder (7) for the optical element (2), in which the light source (5) and the detector (6) are integrated,
**characterized in that**
the holder (7) has a cooling region (10) through which a cooling liquid (12) can flow, said cooling region (10) being in contact with the optical element (2), and the holder (7) comprises a reservoir (13), through which the beam path (14) between the light source (5) and the detector (6) extends, for receiving cooling liquid (12) leaking out at the optical element (2) in case of a leakage.

2. The arrangement as claimed in claim 1, in which the holder (7) is oriented such that the reservoir (13) is located in the direction of gravity (Z) below the surface (8) of the optical element (2).

3. The arrangement as claimed in claim 2, in which an upper edge section (16a) of the reservoir (13) that faces the surface (8) is located in the direction of gravity (Z) below an upper edge section (16b) of the reservoir (13) that is remote from the surface (8), or vice versa.

4. The arrangement as claimed in one of the preceding claims, in which the reservoir forms a recess (13) in the holder (7), in which either the light source (5) or the detector (6) is arranged.

5. The arrangement as claimed in one of the preceding claims, in which the light source (5) is configured for emitting the radiation (9) onto the surface (8) at an angle (a) of more than 10° with respect to the direction of gravity (Z) and/or the detector (6) is configured for detecting the radiation (9) that is reflected at the surface (8) at an angle (a) of more than 10° with respect to the direction of gravity (Z).

6. The arrangement as claimed in one of the preceding claims, in which the light source (5) has a curved light exit face (5a).

7. The arrangement as claimed in one of the preceding claims, in which the light source (5) is configured for emitting radiation (9) in the IR wavelength range.

8. The arrangement as claimed in one of the preceding claims, in which the holder (7) has a feed contour (15, 15a) for feeding the cooling liquid (12) from the optical element (2) into the reservoir (13).

9. The arrangement as claimed in claim 8, in which the feed contour comprises an inclined feed portion (15) extending between an inner edge (7a) of the holder (7), located adjacent to the surface (8), and the reservoir (13).

10. The arrangement as claimed in one of the preceding claims, further comprising: a feed device (11) for feeding the cooling liquid (12) to the cooling region (10).

11. The arrangement as claimed in one of the preceding claims, further comprising: an evaluation device (17) for comparing the intensity (I_{D}) of the radiation (9) detected by the detector (6) to a reference intensity (I_{R}), wherein the evaluation device (17) is preferably configured for outputting an error signal and/or outputting a control signal (18) for deactivating the feed device (11) if the intensity (I_{D}) of the radiation (9) detected by the detector (6) deviates from the reference intensity (I_{R}) by a specified value (Is).

12. A laser source (21), in particular a CO₂ laser source, comprising: an arrangement (1) as claimed in one of the preceding claims for monitoring an optical element, in particular an output coupling mirror (2) or an output coupling window, of the laser source (21).

13. An EUV radiation generating apparatus (20), comprising: an arrangement (1) as claimed in one of claims 1 to 11 for monitoring an optical element (2).

## Revendications

1. Agencement (1) pour surveiller un élément optique (2), comprenant :
une source lumineuse (5) pour émettre un rayonnement (9) sur une surface (8) de l'élément optique (2),
un détecteur (6) pour détecter le rayonnement (9) au moins partiellement réfléchi sur la surface (8) de l'élément optique (2),
un support (7) pour l'élément optique (2), dans lequel la source lumineuse (5) et le détecteur (6) sont intégrés,
**caractérisé en ce**
**que** le support (7) présente une zone de refroidissement (10) pouvant être traversée par un liquide de refroidissement (12) et qui est en contact avec l'élément optique (2), et
**que** le support (7) comprend un réservoir (13) destiné à recevoir le liquide de refroidissement (12) qui s'échappe en cas de fuite sur l'élément optique (2) et à travers lequel passe le chemin optique (14) entre la source lumineuse (5) et le détecteur (6).

2. Agencement selon la revendication 1, dans lequel le support (7) est orienté de telle sorte que le réservoir (13) se trouve en dessous de la surface (8) de l'élément optique (2) dans la direction de la gravité (Z).

3. Agencement selon la revendication 2, dans lequel une partie bord supérieur (16a) du réservoir (13) tournée vers la surface (8) se trouve en dessous d'une partie bord supérieur (16b) du réservoir (13) opposée à la surface (8) dans la direction de la gravité (Z), ou inversement.

4. Agencement selon l'une des revendications précédentes, dans lequel le réservoir forme un évidement (13) dans le support (7), dans lequel soit la source lumineuse (5), soit le détecteur (6) est disposé(e).

5. Agencement selon l'une des revendications précédentes, dans lequel la source lumineuse (5) est conçue pour émettre le rayonnement (9) sur la surface (8) selon un angle (α) supérieur à 10° par rapport à la direction de la gravité (Z) et/ou le détecteur (6) est conçu pour détecter le rayonnement (9) réfléchi sur la surface (8) selon un angle (α) supérieur à 10° par rapport à la direction de la gravité (Z).

6. Agencement selon l'une des revendications précédentes, dans lequel la source lumineuse (5) présente une surface de sortie de lumière (5a) incurvée.

7. Agencement selon l'une des revendications précédentes, dans lequel la source lumineuse (5) est conçue pour émettre le rayonnement (9) dans la gamme de longueurs d'onde IR.

8. Agencement selon l'une des revendications précédentes, dans lequel le support (7) présente un contour d'amenée (15, 15a) pour amener le liquide de refroidissement (12) de l'élément optique (2) dans le réservoir (13).

9. Agencement selon la revendication 8, dans lequel le contour d'amenée comprend une pente d'amenée (15) qui s'étend entre un bord intérieur (7a) du support (7) adjacent à la surface (8) et le réservoir (13).

10. Agencement selon l'une des revendications précédentes, comprenant en outre : un moyen d'amenée (11) pour amener le liquide de refroidissement (12) à la zone de refroidissement (10).

11. Agencement selon l'une des revendications précédentes, comprenant en outre: un moyen d'évaluation (17) pour comparer l'intensité (I_{D}) du rayonnement (9) détecté par le détecteur (6) avec une intensité de référence (I_{R}), le moyen d'évaluation (17) étant de préférence conçu pour délivrer un signal d'erreur et/ou pour délivrer un signal de commande (18) pour désactiver le moyen d'amenée (11) lorsque l'intensité (I_{D}) du rayonnement (9) détecté par le détecteur (6) s'écarte d'une valeur prédéfinie (I_{S}) de l'intensité de référence (I_{R}).

12. Source laser (21), en particulier source laser au CO₂, comprenant : un agencement (1) selon l'une des revendications précédentes pour surveiller un élément optique, en particulier un miroir de sortie (2) ou une fenêtre de sortie, de la source laser (21).

13. Dispositif de génération de rayonnement EUV (20), comprenant : un agencement (1) selon l'une des revendications 1 à 11 pour surveiller un élément optique (2).
